## Europäisches Patentamt
## European Patent Office
## Office européen des brevets

(19)

(11) Veröffentlichungsnummer: **0 157 892**
**B1**

(12) **EUROPÄISCHE PATENTSCHRIFT**

(45) Veröffentlichungstag der Patentschrift:
**24.06.87**

(51) Int. Cl.⁴: **F 15 B 15/08**

(21) Anmeldenummer: **84103974.6**

(22) Anmeldetag: **10.04.84**

(54) Lineartransportvorrichtung.

(43) Veröffentlichungstag der Anmeldung:
**16.10.85 Patentblatt 85/42**

(45) Bekanntmachung des Hinweises auf die Patenterteilung:
**24.06.87 Patentblatt 87/26**

(84) Benannte Vertragsstaaten:
**AT BE CH DE FR GB IT LI LU NL SE**

(56) Entgegenhaltungen:
**EP - A - 0 113 790**
**DE - A - 3 124 915**
**DE - C - 949 534**

(73) Patentinhaber: **Lipinski, Reinhard, Beethovenstrasse 75, D-Plochingen (DE)**
Patentinhaber: **Kaiser, Siegmund H., Grünewaldstrasse 47, D-7440 Nürtingen (DE)**

(72) Erfinder: **Lipinski, Reinhard, Beethovenstrasse 75, D-Plochingen (DE)**
Erfinder: **Kaiser, Siegmund H., Grünewaldstrasse 47, D-7440 Nürtingen (DE)**

(74) Vertreter: **Rüger, Rudolf, Dr.-Ing. et al, Webergasse 3 Postfach 348, D-7300 Esslingen/Neckar (DE)**

ACTORUM AG

## Beschreibung

Die Erfindung betrifft eine Lineartransportvorrichtung mit einem längsgeschlitzten, endseitig verschlossenen Zylinderrohr, in dem ein in Achsrichtung angetriebenes, kraftaufnehmendes Element längsverschieblich geführt ist und dessen Längsschlitz beiderseitig des kraftaufnehmenden Elementes durch ein innenliegendes, biegsames Dichtband abgedichtet ist, das unter einem durch den Längsschlitz nach aussen ragenden, mit dem kraftaufnehmenden Element verbundenen Kraftübertragungselement hindurchgeführt ist und dem gegebenenfalls ein auf der Zylinderrohraussenseite aufliegendes, ebenfalls endseitig verankertes, biegsames Abdeckband zugeordnet ist, das eine mit dem Dichtband über den Längsschlitz zusammenwirkende Halterungseinrichtung aufweist, wobei das Kraftübertragungselement mittels eines das Zylinderrohr teilweise umgreifenden bügelartigen Führungsteiles auf wenigstens zwei parallelen Führungsbahnen einer aussenliegenden Parallelführung längsgeführt ist, deren Führungsbahnen zu beiden Seiten des Längsschlitzes unmittelbar auf der Aussenseite des Zylinderrohres angeordnet sind.

Eine aus der DE-A-3 124 915 bekannte Lineartransportvorrichtung dieser Art ist in Gestalt eines Druckmittelzylinders ausgebildet, bei dem das kraftaufnehmende Element ein gegen die Innenwand des Zylinderrohres abgedichteter Kolben ist. Das durch den Längsschlitz nach aussen ragende Kraftübertragungselement ist einerseits mit dem Kolben und andererseits mit dem bügelartigen Führungsteil starr verbunden, das beidseitig des Längsschlitzes auf der Aussenwand des Zylinderrohres zwangsläufig exakt längsgeführt ist. Wegen dieser Längsführung kann das Kraftübertragungselement verhältnismässig grosse Querkräfte oder -momente aufnehmen. Ausserdem beugen die beidseitig des Längsschlitzes auf der Aussenseite des Zylinderrohres liegenden Führungsbahnen im Zusammenwirken mit dem das Zylinderrohr teilweise umgreifenden bügelartigen Führungsteil einer bei hohen Innendrücken auftretenden unerwünschten Aufweitung des Längsschlitzes des Zylinderrohres vor.

Die Führung des Kraftübertragungselementes durch die Führungsbahnen der aussenliegenden Längsführung muss aus Gründen der Leichtgängigkeit ein gewisses Spiel aufweisen. Das bedeutet, dass das Kraftübertragungselement unter der Einwirkung von Querkräften oder -momenten eine kleine begrenzte Kippbewegung bezüglich der Zylinderrohrachse ausführen kann oder bei sehr grossen Beanspruchungen auch eine gewisse elastische Verformung erleidet. Je nach ihrer Richtung kann diese Kippbewegung zu einer verhältnismässig grossen radialen Auslenkung der Kolbenenden führen, die durch die in der Regel als Dichtmanschetten ausgebildeten Kolben-/Zylinderdichtungen aufgenommen werden muss. Solche auf die Dichtmanschetten wirkenden Seitenkräfte sind aber deshalb unerwünscht, weil sie zu einer ungleichmässigen Beanspruchung der Dichtmanschetten führen und deren Lebensdauer ungünstig beeinflussen können. Eine solche ungleichmässige seitliche Beanspruchung der Kolben-/Zylinderdichtungen des verhältnismässig langen Kolbens kann auch dadurch zustandekommen, dass bei einem langen Druckmittelzylinder das Zylinderrohr bei nicht genau ausgerichteter Lagerung etwas durchgebogen ist, was sich gelegentlich nicht vermeiden lässt.

Um bei einer solchen mit Rücksicht auf die Leichtgängigkeit und die Fertigungstoleranzen unvermeidbaren kleinen Kippbewegung des Kolbens bezüglich des Zylinderrohres eine unerwünschte, ungleichmässige Beanspruchung der elastischen Dichtmanschetten des Kolbens zu verhüten, ist bei einem durch die EP-A-113 790 (Anmelde-Nr. 83100256.3; Anmeldetag 14.1 .83; Veröffentlichungstag 25.7.84) zum Stand der Technik gehörigen Druckmittelzylinder der Kolben mit zwei beidseitig des Kraftübertragungselementes angeordneten und jeweils wenigstens eine Kolben-/Zylinderdichtung tragenden Kolbenteilen ausgebildet, die mit dem Kraftübertragungselement radial begrenzt beweglich verbunden sind. Der auf diese Weise mögliche Ausgleich von Fertigungstoleranzen ist sehr wirksam, aber herstellungsbedingt beschränkt.

Aufgabe der Erfindung ist es deshalb, allgemein eine Lineartransportvorrichtung der eingangs genannten Art in dem Sinne zu verbessern, dass durch ungleichmässige oder übermässige Belastungen des Kraftübertragungs- oder des Führungsteiles oder durch Herstellungstoleranzen, insbesondere der Führungen und des Zylinderrohres, bedingte ungleichmässige Beanspruchungen des in dem Zylinderrohr angeordneten kraftaufnehmenden Teiles verhütet werden, ohne dass dazu aufwendige konstruktive Massnahmen ergriffen werden müssen.

Zur Lösung dieser Aufgabe ist die Lineartransportvorrichtung erfindungsgemäss dadurch gekennzeichnet, dass das kraftaufnehmende Element mit dem Führungsteil an wenigstens einer zwischen dem Führungsteil und dem Kraftübertragungsteil angeordneten und ausserhalb des Zylinderrohres liegenden Lagerstelle gekuppelt ist, die wenigstens eine, vorzugsweise rechtwinklig zu der Zylinderachse und in der Längsschlitzmittelebene verlaufende Lagerachse aufweist, um die das Kraftübertragungsteil und das Führungsteil begrenzt gegeneinander verdrehbar sind.

Bei dieser Lineartransportvorrichtung ist das kraftaufnehmende Element im Inneren des Zylinderrohres geführt, wobei es sich von aussen unbehindert jeweils lagerichtig selbsttätig einstellen kann. Andererseits braucht die Führung des Führungsteiles auf den an der Aussenseite des Zylinderrohres vorgesehenen Führungsbahnen auf das kraftaufnehmende Element nur geringe Rücksicht zu nehmen, weil die Kupplung zwischen dem Führungsteil und dem kraftaufnehmenden Element begrenzt beweglich ausgebildet ist. Damit können herstellungsbedingte oder im Betrieb auftretende Toleranzen, sowohl der Führungsbahnen als auch deren Lage relativ zu der Zylinderrohrachse, selbsttätig ausgeglichen werden, ohne dass es dazu besonderer Massnahmen an dem kraftaufnehmenden Element selbst bedürfte.

Da das Kraftübertragungsteil von der Führung durch das Führungsteil weitgehend unabhängig ist, kann es auch in einer Ausführungsform an den Seitenwandungen des Längsschlitzes des Zylinderrohres gegebenenfalls zusätzlich zu der Führung in dem Zylinderrohr geführt sein. Dazu kann das Kraftübertragungsteil seitlich über Führungsteile gleitend oder rollend gegen die Seitenwandungen des Längsschlitzes abgestützt sein. Solche Führungsteile können bspw. Führungssteine sein, die in die dem Abdeckband oder dem Dichtband zugeordneten Nuten in den Seitenwandungen des Längsschlitzes eingreifen und dort geführt sind.

Die Lagerstelle weist mit Vorteil ein mit dem Kraftübertragungsteil oder dem Führungsteil verbundenes, kreisrundes Lagerteil auf, das drehbar in eine entsprechende Lagerpfanne an dem jeweils anderen Teil eingreift.

Ausserdem können an der Lagerstelle das Kraftübertragungsteil und das Führungsteil in Richtung der Lagerachse begrenzt gegeneinander verschieblich miteinander verbunden sein, so dass durch Herstellungstoleranzen bedingte Abstandsänderungen zwischen dem Führungsteil und der Zylinderrohrachse bzw. dem kraftaufnehmenden Teil selbsttätig ausgeglichen werden. Dazu kann bei der erwähnten Ausführungsform das zylindrische Lagerteil in der Lagerpfanne in Richtung der Lagerachse verschieblich gelagert sein.

Sehr einfache bauliche Verhältnisse ergeben sich, wenn das Abdeckband oberhalb der Lagerstelle verlaufend durch das Führungsteil hindurch geführt ist, das sehr schmal ausgebildet werden kann. Es genügt dann, auf das Führungsteil eine Abdeckung für das Abdeckband aufzusetzen.

Hinsichtlich der Gestaltung des Führungsteiles und der mit diesem verbundenen Teile besteht wegen der begrenzt beweglichen Kopplung des Führungsteiles mit dem in dem Zylinderrohr geführten kraftaufnehmenden Teil weitgehende Freiheit. So kann das Führungsteil mit einem auf dem Zylinderrohr aussen längsgeführten Schlitz starr verbunden sein, der bspw. an der dem Längsschlitz abgewandten Unterseite des Zylinderrohres angeordnet ist und der die Längsführung des Führungsteiles übernimmt.

Wird das Führungsteil entsprechend schmal ausgebildet, so kann an dem Zylinderrohr im Bereiche des Längsschlitzes aussen ein Massstab angeordnet sein, der mit dem Führungsteil zusammenwirkt; es kann auch an dem Zylinderrohr neben dem Längsschlitz wenigstens ein längsverlaufendes Versteifungselement vorgesehen werden, falls dies bspw. bei langen Zylinderrohren erforderlich werden sollte.

Wie bereits eingangs erwähnt, kann das kraftaufnehmende Element ein gegen die Innenwand des Zylinderrohres abgedichteter Kolben sein, der beidseitig mit einem Druckmedium beaufschlagt werden kann, wobei das Zylinderrohr als Druckmittelzylinder ausgebildet ist.

Dabei ergeben sich besonders einfache Verhältnisse, wenn der Kolben ein mit dem Kraftübertragungselement verbundenes Rohr aufweist, in das beidseitig jeweils ein koaxiales, Dichteinrichtungen tragendes Kolbenteil eingesetzt ist. Dieses Rohr, das unabhängig von dem Führungsteil ist, braucht nur so lang zu sein, wie dies der schwächste Querschnitt zur Übertragung der maximal auftretenden Kraft erfordert.

In einer anderen Ausführungsform kann das kraftaufnehmende Element aber auch eine Spindelmutter sein, die auf einer in stirnseitig an dem Zylinderrohr angeordneten Endteilen drehbar gelagerten und mit einer Antriebsquelle kuppelbaren Gewindespindel sitzt.

In der Zeichnung sind Ausführungsbeispiele des Gegenstandes der Erfindung dargestellt. Es zeigen:

Fig. 1 eine Lineartransportvorrichtung gemäss der Erfindung in der Ausbildung als Druckmittelzylinder, in einer perspektivischen Teildarstellung, teilweise aufgeschnitten,

Fig. 2 die Lineartransportvorrichtung nach Fig. 1, in einer abgewandelten Ausführungsform, teilweise aufgeschnitten und in einer entsprechenden Darstellung, und

Fig. 3 eine Lineartransportvorrichtung gemäss der Erfindung in der Ausbildung mit einem Spindeltrieb, in perspektivischer Teildarstellung, teilweise aufgeschnitten.

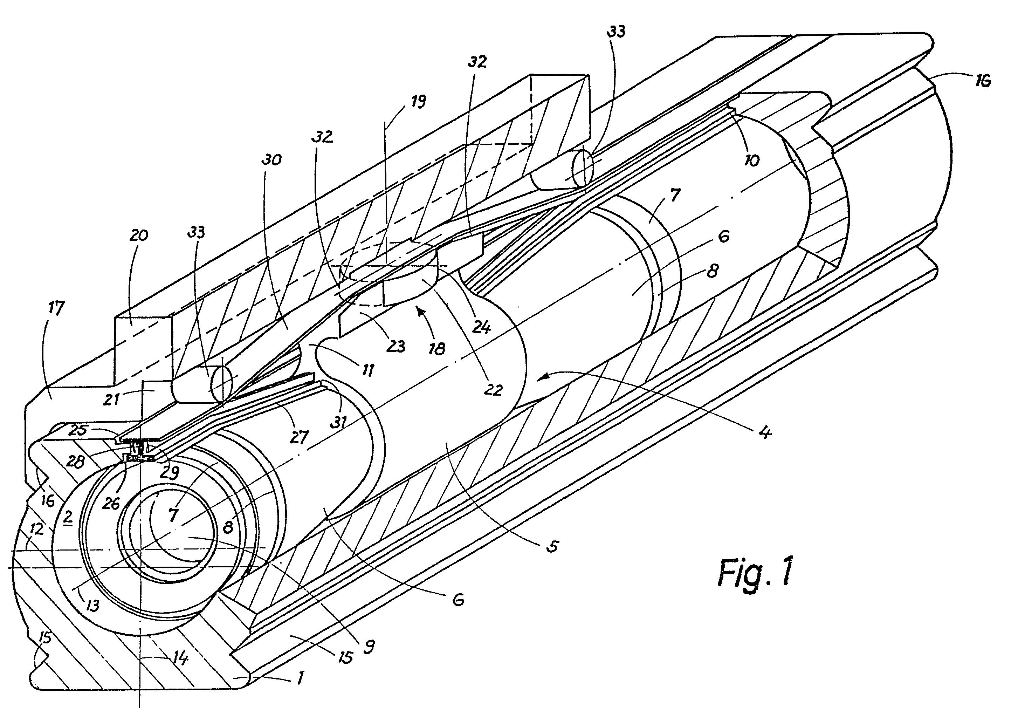

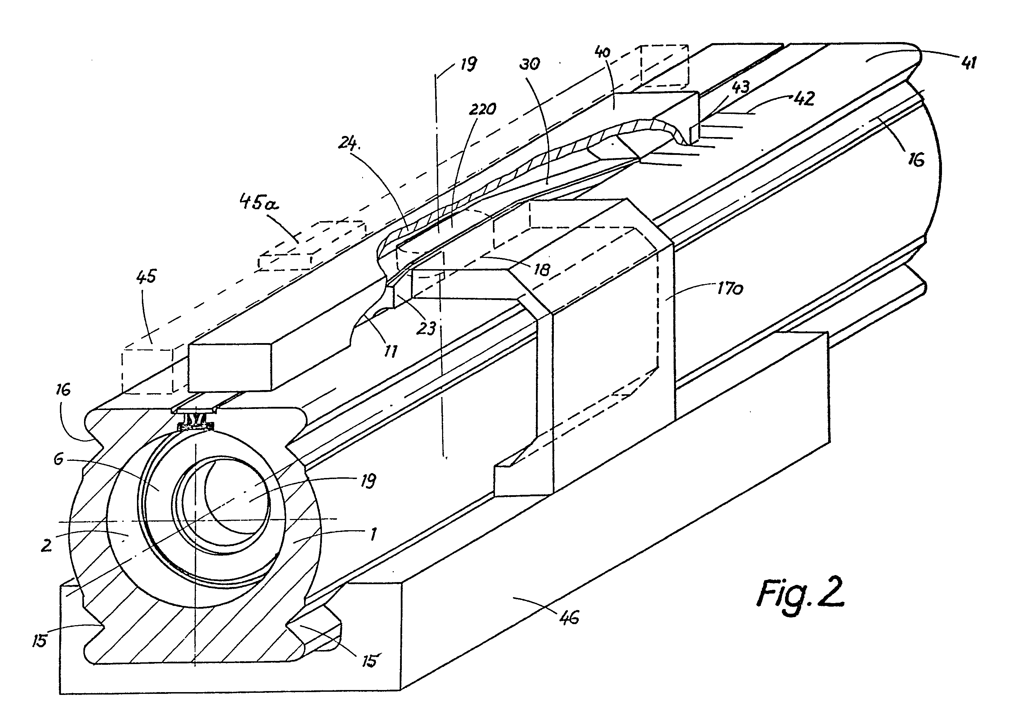

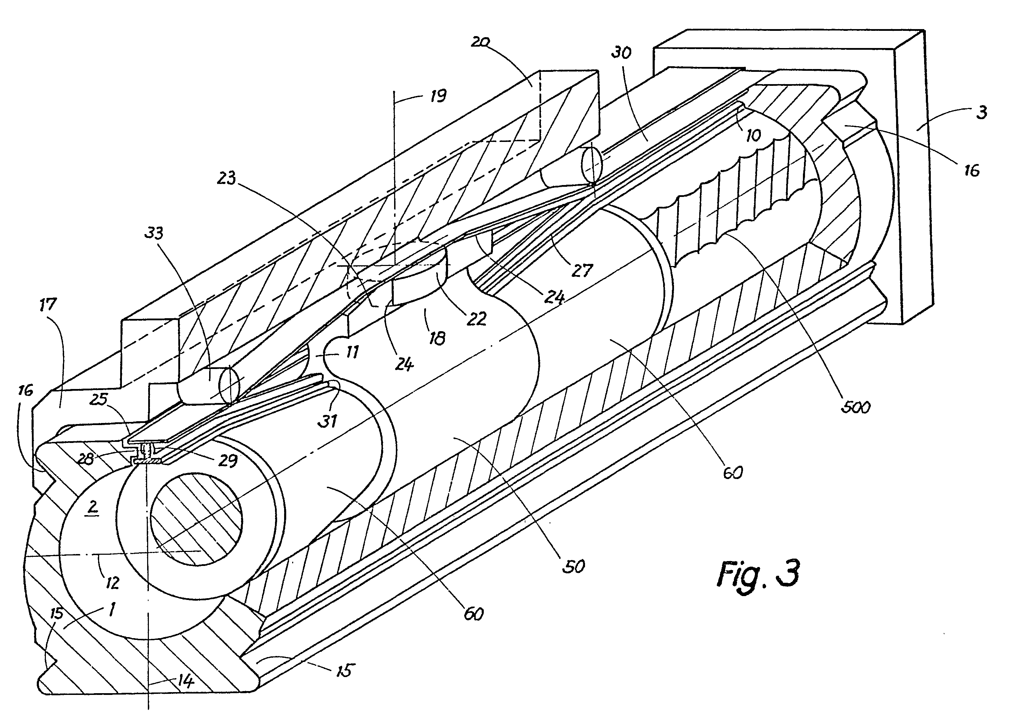

Die in den Fig. 1, 2 dargestellte Lineartransportvorrichtung ist in Gestalt eines Druckmittelzylinders ausgebildet. Sie weist ein Zylinderrohr 1 auf, dessen Zylinderbohrung mit 2 bezeichnet und endseitig durch zwei nicht weiter dargestellte Deckel oder Endteile verschlossen ist, von denen einer bei 3 in Fig. 3 veranschaulicht ist.

In der Zylinderbohrung 2 ist ein ein kraftaufnehmendes Element bildender Kolben 4 längsverschieblich geführt, der ein dünnwandiges, verhältnismässig kurzes Rohrstück 5 aufweist, in das beidseitig zwei im wesentlichen kegelstumpfförmige, gegebenenfalls aus Kunststoffmaterial bestehende Kolbenteile 6 mit einem in das Rohr 5 eingreifenden Zapfen oder dergl. eingesetzt sind. Die koaxialen Kolbenteile 6 weisen jeweils einen zylindrischen Abschnitt 7 auf, in dessen Bereich eine bei 8 angedeutete Kolbendichtung angeordnet ist, die mit der Wandung der Zylinderbohrung 2 zusammenwirkt, so dass der Kolben 4 durch die beiden Zylinderdichtungen 8 gegen die Zylinderbohrung 2 abgedichtet ist.

Die beiden Kolbenteile 6 sind jeweils endseitig mit einer koaxialen Sackbohrung 9 versehen, die in der Kolbenendstellung mit einem an dem zugeordneten Deckel 3 angeordneten zapfenförmigen Dämpfungselement zusammenwirken kann, das nicht weiter veranschaulicht ist.

Das Zylinderrohr 1 ist an seiner Oberseite mit einem Längsschlitz 10 ausgebildet, durch den ein an dem Rohr 5 einstückig angeformtes, stegartiges Kraftübertragungsteil 11 nach aussen ragt.

An der Aussenseite des Zylinderrohres 1 sind oberhalb und unterhalb der bei 12 angedeuteten, die Achse 13 der Zylinderbohrung 2 enthaltenden Mittelebene beidseitig der durch den Längsschlitz 10 verlaufenden vertikalen Mittelebene 14 liegende Führungsbahnen 15, 16 angeordnet, die jeweils paarweise einander zugeordnet sind.

Bei der Ausführungsform nach Fig. 1 ist auf den beiden oberhalb der Mittelebene 12 liegenden Führungsbahnen 16, die beidseitig des Längsschlitzes 10 sich erstrecken, ein bügelartiges Führungsteil 17 längsverschieblich gelagert, das mit dem das kraftaufnehmende Teil bildenden Kolben 4 begrenzt beweglich an einer Lagerstelle 18 verbunden ist.

Die ausserhalb des Zylinderrohres 1 liegende Lagerstelle 18 weist eine in der Längsmittelebene 14 liegende vertikale Lagerachse 19 auf, um die das Kraftübertragungsteil 11 und das Führungsteil 17 zum Ausgleich von Toleranzen begrenzt gegeneinander verdrehbar sind.

Die Lagerstelle 18 ist dadurch gebildet, dass an einem stegartigen Teil 20 des Führungsteiles 17, das eine oberhalb des Längsschlitzes 10 verlaufende Längsnut 21 begrenzt, im Bereiche des Bodens der Längsnut 21 eine zu der Lagerachse 19 koaxiale, ein Lagerteil bildende Scheibe 22 befestigt ist, die in eine an einem entsprechend verbreiterten Teil 23 des Kraftübertragungsteiles 11 ausgebildete zylindrische Pfanne 24 um die Lagerachse 19 verdrehbar und in Richtung der Lagerachse 19 verschieblich eingesetzt ist.

Da das Führungsteil 17 und das Kraftübertragungsteil 11 an der Lagerstelle 18 somit um die Lagerachse 19 begrenzt verdrehbar und in Richtung der Lagerachse 19 begrenzt längsverschieblich miteinander verbunden sind, können Herstellungstoleranzen in den Führungsbahnen 16 etc. selbsttätig ausgeglichen werden, ohne dass auf das Rohrstück 5 des Kolbens 4 über das Kraftübertragungsteil 11 ungleichmässige Beanspruchungen übertragen würden.

Grundsätzlich wäre es auch denkbar, das durch die Scheibe 22 gebildete Lagerteil bspw. als Kugel auszubilden, die dann in eine entsprechende kugelige Lagerpfanne 24 eingreift, so dass auch eine begrenzte Kippbeweglichkeit des Kolbens 4 um eine horizontale Kippachse bezüglich des Führungsteiles 17 und umgekehrt gegeben ist.

Das Kraftübertragungsteil 11 kann bei 23 mit einander gegenüberliegenden Flächen seitlich an den Seitenwandungen des Längsschlitzes 10 geführt sein. Dabei kann die Anordnung auch derart getroffen sein, dass das Kraftübertragungsteil 11 seitlich angeordnete Führungsrollen oder Gleitsteine trägt, die mit den Seitenwänden des Längsschlitzes 10 oder den dort vorgesehenen Längsnuten 25, 26 (Fig. 1) zusammenwirken.

Beidseitig des Kraftübertragungsteiles 11 ist der Längsschlitz 10 durch ein biegsames Dichtband 27 abgedichtet, das in der Zylinderbohrung 2 verlaufend endseitig in den Deckeln 3 verankert ist. Das aus Kunststoffmaterial bestehende Dichtband 27 weist einen Steg 28 auf, mit dem es durch den Längsschlitz 10 ragt und der in eine Längsnut 29 eines biegsamen Abdeckbandes 30 eingreift, das auf der Oberseite des Zylinderrohres 1 verlaufend den Längsschlitz 10 von aussen her abdeckt. Das Abdeckband 30 und das Dichtband 27 liegen jeweils auf dem Boden der Nuten 25 bzw. 26 auf. Die Gestaltung der beiden Bänder 30, 27 und deren Zusammenwirken sind in einzelnen bspw. in der DE-PS 31 24 915 beschrieben.

In dem zwischen den beiden Kolbendichtungen 8 liegenden drucklosen Bereich ist das Dichtband 27, der kegeligen Mantelfläche der beiden Kolbenteile 6 folgend, durch einen Durchlass 31 an dem Rohrstück 5 unterhalb des Kraftübertragungsteiles 11 geleitet, so dass es in diesem drucklosen Bereich von dem Längsschlitz 10 abgehoben ist und dem Kraftübertragungsteil 11 den Durchtritt durch den Längsschlitz 10 gestattet.

In dem gleichen Bereich ist das Abdeckband 30 über entsprechend gestaltete Schrägflächenteile 32 des Kraftübertragungsteiles 11 gleitend über die Scheibe 22 hinweg geleitet. An dem Führungsteil 17 beidseitig der Lagerstelle 18 angeordnete Führungsrollen 33 drücken bei einer Längsbewegung des Kolbens 4 das Abdeckband 30 an der vorlaufenden Kolbenseite auf den Längsschlitz 10 nieder, während von der Seite der Zylinderbohrung 2 her das entsprechende Kolbenteil 6 das Dichtband 27 ebenfalls an die Berandung des Längsschlitzes 10 anpresst, wobei die Längsnut 29 und der Steg 28 miteinander fortlaufend in Eingriff kommen, wie dies aus der vorerwähnten Patentschrift bekannt ist.

Die Ausführungsform der Lineartransportvorrichtung nach Fig. 2 unterscheidet sich von jener nach Fig. 1 lediglich darin, dass das Führungsteil 170 etwas anders gestaltet ist. Gleiche Teile sind deshalb in beiden Figuren mit gleichen Bezugzeichen bezeichnet, wobei sich eine nochmalige Erläuterung dieser Teile erübrigt.

Bei der Ausführungsform nach Fig. 2 ist das in Gestalt eines im wesentlichen U-förmigen Bügels 170 ausgebildete Führungsteil mit einem scheibenförmigen Lagerteil 220 versehen, das in eine am dem Teil 23 des Kraftübertragungsteiles 11 angeordnete, entsprechend gestaltete Lagerpfanne 24 formschlüssig eingesetzt ist. Das Führungsteil 170 ist somit bezüglich des Kraftübertragungsteiles 11 an der Lagerstelle 18 sowohl begrenzt vertikal beweglich als auch um die vertikale Lagerachse 19 begrenzt schwenkbar. Die Lagerstelle 18 und das über das Lagerteil 220 hinweggeführte Abdeckband 30 sind durch eine aufgesetzte längliche Abdeckhaube 40 abgedeckt, die mit dem Kraftübertragungsteil 11 verbunden ist und deren Breite nur geringfügig grösser als die des Abdeckbandes 30 und damit des Längsschlitzes 10 ist.

Auf einer dem Längsschlitz 10 benachbarten ebenen oberen Fläche 41 ist eine Skala 42 angeordnet, die mit einem bei 43 angedeuteten beweglichen Messstrich zusammenwirkt. Damit kann die jeweilige Stellung des Kraftübertragungsteiles 11 in dem Zylinderrohr 1 genau abgelesen werden.

Auf der dem Führungsbügel 170 gegenüberliegenden Seite kann an dem Zylinderrohr 2 neben dem Längsschlitz 10 bspw. eine Verstärkungsleiste 45 aufgesetzt sein, die bei sehr langen Zylinderrohren 1 die Durchbiegung des Zylinderrohres verhütet.

Auf den beiden unteren Führungsbahnen 15 des Zylinderrohres 1 ist ein im wesentlichen U-förmiger Schlitten 46 längsverschieblich geführt, der starr mit dem Führungsbügel 170 verbunden ist, welcher seinerseits keiner eigenen Führung mehr bedarf. Mit dem Schlitten 46 können angetriebene Maschinenelemente etc. verbunden sein.

Die in Fig. 3 dargestellte Ausführungsform einer Lineartransportvorrichtung entspricht in wesentlichen Teilen ebenfalls jener nach Fig. 1. Auch hier sind gleiche Teile mit gleichen Bezugzeichen versehen und nicht weiter erläutert.

Während aber bei der Ausführungsform nach Fig. 1 das kraftaufnehmende Teil in Gestalt eines Kolbens 4 ausgebildet ist, der durch Druckmittelbeaufschlagung auf den Stirnflächen der beiden Kolbenteile 6 längsverschieblich ist, ist bei der Vorrichtung nach Fig. 3 das kraftaufnehmende Teil eine Spindelmutter, die in dem Rohrstück 50 untergebracht ist und die mit einer bei 500 angedeuteten Gewindespindel zusammenwirkt, welche sich koaxial durch die Zylinderbohrung 2 erstreckt. Die Gewindespindel 500 ist beidseitig in den Endteilen oder Deckeln 3 drehbar gelagert; sie ist zur Kupplung mit einer nicht weiter veranschaulichten Antriebsquelle, bspw. einem Elektromotor, eingerichtet.

Die beiden beidseitig in das Rohrstück 50 eingesetzten kegelstumpfförmigen Kunststoffelemente 60 haben in diesem Falle nicht die Funktion eines abdichtenden Kolbenteils, sondern sie haben lediglich die Aufgabe, ähnlich wie die Kolbenteile 6, das Dichtband 27 in dem Bereich des Rohrstückes 50 in dessen Durchlass 31 einzuleiten und aus diesem wieder herauszuführen.

Dem Zylinderrohr 2 kann in einer alternativen Ausführungsform auch ein externes Führungssystem zugeordnet sein, dass parallel zu der Achse 13 der Zylinderbohrung 2 ausgerichtet ist.

Ein solches externes Führungssystem könnte bspw. in Fig. 2 bei 45 anstelle der Verstärkungsleiste vorgesehen sein, wobei das bei 45a angedeutete bewegliche Element, das nach Art eines Schlittens einer Kugelbüchse oder dergl. gestaltet sein kann, mit dem Kraftübertragungsteil 11 oder dem Führungsteil 170 vorzugsweise begrenzt beweglich verbunden ist. Dabei sind auch Ausführungsformen denkbar, bei denen der Schlitten 46 und das Führungsteil 170 entfallen, weil das externe Führungssystem bei 45 die Aufgabe der Teile 46, 170 übernimmt.

Das externe Führungssystem kann im übrigen, nicht nur wie bei 45 angedeutet, unmittelbar auf das Zylinderrohr 1 aufgebaut sein; die Anordnung kann auch derart getroffen sein, dass das externe Führungssystem an einem dem Zylinderrohr ortsfest zugeordneten Schienenteil angebaut ist.

## Patentansprüche

1. Lineartransportvorrichtung mit einem längsgeschlitzten, endseitig verschlossenen Zylinderrohr (1), in dem ein in Achsrichtung angetriebenes kraftaufnehmendes Element (4, 50) längsverschieblich geführt ist und dessen Längsschlitz (10) beiderseits des kraftaufnehmenden Elementes durch ein innenliegendes, biegsames Dichtband (27) abgedichtet ist, das unter einem durch den Längsschlitz nach aussen ragenden, mit dem kraftaufnehmenden Element verbundenen Kraftübertragungsteil (11) hindurchgeführt ist und dem gegebenenfalls ein auf der Zylinderaussenseite aufliegendes, ebenfalls endseitig verankertes, biegsames Abdeckband (30) zugeordnet ist, das eine mit dem Dichtband über den Längsschlitz zusammenwirkende Halterungseinrichtung (29) aufweist, wobei das Kraftübertragungsteil mittels eines das Zylinderrohr teilweise umgreifenden bügelartigen Führungsteiles (17, 170) auf wenigstens zwei parallelen Führungsbahnen (15, 16) einer aussenliegenden Parallelführung längsgeführt ist, deren Führungsbahnen zu beiden Seiten des Längsschlitzes unmittelbar auf der Aussenseite des Zylinderrohres angeordnet sind, dadurch gekennzeichnet, dass das kraftaufnehmende Element (4, 50) mit dem Führungsteil (17, 170) an wenigstens einer zwischen dem Führungsteil (17, 170) und dem Kraftübertragungsteil (11) angeordneten und ausserhalb des Zylinderrohres (1) liegenden Lagerstelle (18) gekuppelt ist, die wenigstens eine, vorzugsweise rechtwinklig zu der Zylinderachse (13) und in der Längsschlitzmittelebene (14) verlaufende Lagerachse (19) aufweist, um die das Kraftübertragungsteil (11) und das Führungsteil (17, 170) begrenzt gegeneinander verdrehbar sind.

2. Vorrichtung nach Anspruch 1, dadurch gekennzeichnet, dass das Kraftübertragungsteil (11) an den Seitenwandungen des Längsschlitzes (10) geführt ist.

3. Vorrichtung nach Anspruch 2, dadurch gekennzeichnet, dass das Kraftübertragungsteil (11) seitlich über Führungsteile gleitend oder rollend gegen die Seitenwandungen des Längsschlitzes (10) abgestützt ist.

4. Vorrichtung nach einem der vorhergehenden Ansprüche, dadurch gekennzeichnet, dass die Lagerstelle (18) ein mit dem Kraftübertragungsteil (11) oder dem Führungsteil (17, 170) verbundenes kreisrundes Lagerteil (22, 220) aufweist, das drehbar in eine entsprechende Lagerpfanne (24) des jeweils anderen Teiles eingreift.

5. Vorrichtung nach einem der vorhergehenden Ansprüche, dadurch gekennzeichnet, dass an der Lagerstelle (18) das Kraftübertragungsteil (11) und das Führungsteil (17, 170) ausserdem in Richtung der Lagerachse (19) begrenzt gegeneinander verschieblich miteinander verbunden sind.

6. Vorrichtung nach den Ansprüchen 4 und 5, dadurch gekennzeichnet, dass das zylindrische Lagerteil (22, 220) in der Lagerpfanne (24) in Richtung der Lagerachse (19) begrenzt verschieblich gelagert ist.

7. Vorrichtung nach einem der vorhergehenden Ansprüche, dadurch gekennzeichnet, dass das Abdeckband (30) oberhalb der Lagerstelle (18) verlaufend durch das Führungsteil (17) hindurchgeführt ist.

8. Vorrichtung nach Anspruch 7, dadurch gekennzeichnet, dass auf das Führungsteil (170) eine Abdeckung (40) für das Abdeckband (30) aufgesetzt ist.

9. Vorrichtung nach einem der vorhergehenden Ansprüche, dadurch gekennzeichnet, dass das Führungsteil (170) mit einem auf dem Zylinderrohr (2) aussen längsgeführten Schlitten (46) starr verbunden ist, der an der dem Längsschlitz (10) abgewandten Unterseite des Zylinderrohres (2) angeordnet ist.

10. Vorrichtung nach einem der vorhergehenden Ansprüche, dadurch gekennzeichnet, dass an dem Zylinderrohr (1) im Bereiche des Längsschlitzes (10) aussen ein Massstab (42) angeordnet ist, der mit dem Führungsteil (170) oder einem mit diesem verbundenen Teil (40) zusammenwirkt.

11. Vorrichtung nach einem der Ansprüche 1 bis 10, dadurch gekennzeichnet, dass an dem Zylinderrohr (1) neben dem Längsschlitz (10) wenigstens ein längsverlaufendes Versteifungselement (45) angeordnet ist.

12. Vorrichtung nach einem der vorhergehenden Ansprüche, dadurch gekennzeichnet, dass das kraftaufnehmende Element ein gegen die Innenwand des Zylinderrohres abgedichteter Kolben (4) ist.

13. Vorrichtung nach Anspruch 12, dadurch gekennzeichnet, dass der Kolben (4) ein mit dem Kraftübertragungsteil (11) verbundenes Rohrstück (5) aufweist, in das beidseitig jeweils ein koaxiales, Dichteinrichtungen (8) tragendes Kolbenteil (6) eingesetzt ist.

14. Vorrichtung nach einem der Ansprüche 1 bis 11, dadurch gekennzeichnet, dass das kraftaufnehmende Element eine Spindelmutter (50) ist, die auf einer in stirnseitig an dem Zylinderrohr (1) angeordneten Endteilen (3) drehbar gelagerten und mit einer Antriebsquelle kuppelbaren Gewindespindel (500) sitzt.

15. Vorrichtung nach einem der vorhergehenden Ansprüche, dadurch gekennzeichnet, dass dem Zylinderrohr (1) ein externes, parallel zu der Zylinderachse (13) ausgerichtetes Führungssystem zugeordnet ist, das ein mit dem Kraftübertragungsteil (11) oder dem Führungsteil (17, 170) gegebenenfalls begrenzt beweglich verbundenes geführtes Teil (45a) aufweist.

## Claims

1. A linear conveying device having a longitudinally slotted cylindrical tube (1) closed at the end side, in which a force-receiving element (4, 50) driven in the axial direction slides longitudinally, its longitudinal slot (10) being sealed on both sides of the force-receiving element by an internal resilient sealing strip (27) extending through a force-transmitting member (11) extending outwards through the longitudinal slot and connected to the force-receiving element and being associated if necessary with a resilient cover strip (30) which bears against the cylinder outside and is also anchored at the end side and has a retaining device (29) cooperating with the sealing strip via the longitudinal slot, the force-transmitting member being longitudinally guided via a bowed guide member (17, 170) partially engaging around the cylindrical tube on at least two parallel guideways (15, 16) of an external parallel guide, whose guideways are disposed on both sides of the longitudinal slot directly on the outside of the cylindrical tube, characterized in that the force-receiving element (4, 50) is coupled to the guide member (17, 170) at at least one bearing place (18) disposed between the guide member (17, 170) and the force-transmitting member (11) and lying outside the cylindrical tube (1) and having at least one bearing axis which extends preferably at right angles to the cylinder axis (13) and in the longitudinal central plane (14) of the longitudinal slot and around which the force-transmitting member (11) and the guide member (17, 170) can be rotated in relation to one another to a limited extent.

2. A device according to Claim 1, characterized in that the force-transmitting member (11) is guided on the side walls of the longitudinal slot (10).

3. A device according to Claim 2, characterized in that the force-transmitting member (11) is borne laterally to slide or roll via guide members against the side walls of the longitudinal slot (10).

4. A device according to one of the preceding Claims, characterized in that the bearing place (18) has a circular bearing member (22, 220) which is connected to the force-transmitting member (11) or the guide member (17, 170) and engages rotatably in a matching bushing (24) of the particular other member.

5. A device according to one of the preceding Claims, characterized in that at the bearing place (18) the force-transmitting member (11) and the guide member (17, 170) are also interconnected to slide in relation to one another to a limited extent in the direction of the bearing axis (19).

6. A device according to Claims 4 and 5, characterized in that the cylindrical bearing member (22, 220) is mounted in the bushing (24) with provision for limited sliding in the direction of the bearing axis (19).

7. A device according to one of the preceding Claims, characterized in that the cover strip (30) extends above the bearing place (18) and passes through the guide member (17).

8. A device according to Claim 7, characterized in that a cover (40) for the cover strip (30) is slipped over the guide member (170).

9. A device according to one of the preceding Claims, characterized in that the guide member (170) is rigidly connected to a carriage (46) which is longitudinally guided on the outside of the cylindrical tube (2) and is disposed on the underside thereof remote from the longitudinal slot (10).

10. A device according to one of the preceding Claims, characterized in that a scale (42) is disposed on the outside of the cylindrical tube (11) in the zone of the longitudinal slot (10) and cooperates with the guide member (170) or a member (40) connected thereto.

11. A device according to one of Claims 1 to 10, characterized in that at least one longitudinally extending reinforcing element (45) is disposed on the cylindrical tube (1) alongside the longitudinal slot (10).

12. A device according to one of the preceding Claims, characterized in that the force-receiving element is a piston (4) sealed against the inside wall of the cylindrical tube.

13. A device according to Claim 12, characterized in that the piston (4) has a tubular member (5) which is connected to the force-transmitting member (11) and into each side of which a coaxial piston member (6) bearing sealing devices (8) is inserted.

14. A device according to one of Claims 1 to 11, characterized in that the force-receiving element is a spindle nut (50) disposed on a screwthreaded spindle (500) which is rotatably mounted in end members (3) disposed on the end face of the cylindrical tube (1) and can be coupled to a drive source.

15. A device according to one of the preceding Claims, characterized in that associated with the cylindrical tube (1) is an external guide system which is aligned in parallel with the cylinder axis (13) and has a member (45a) connected if necessary with provision for limited movement to the force-transmitting member (11) or the guide member (17, 170).


## Revendications

1. Dispositif de transport linéaire, comportant un tube cylindrique (1) fendu longitudinalement, fermé à ses extrémités, dans lequel un élément récepteur de force (4, 50) entraîne en direction axiale est guidé à coulissement longitudinal, la fente longitudinale (10) du tube étant fermée de manière étanche, des deux côtés de l'élément récepteur de force, par une bande d'étanchéité flexible (27) située à l'intérieur et passant sous un organe transmetteur de force (11) qui est lié à l'élément récepteur de force et dépasse à l'extérieur en traversant la fente longitudinale, une bande de recouvrement flexible (30), également fixée à ses extrémités, située sur le côté extérieur du cylindre, étant éventuellement conjuguée à la bande d'étanchéité et présentant un dispositif de maintien (29) qui coopère avec la bande d'étanchéité en passant par la fente longitudinale, l'organe transmetteur de force recevant, au moyen d'un coulisseau du genre étrier (17, 170) entourant partiellement le tube cylindrique, un guidage longitudinal sur au moins deux pistes de guidage (15, 16), d'un guide parallèle situé extérieurement, ces pistes de guidage étant agencées directement sur le côté extérieur du tube cylindrique, des deux côtés de la fente longitudinale, caractérisé par le fait que l'élément récepteur de force (4, 50) est couplé au coulisseau (17, 170) par au moins une articulation (18) agencée entre le coulisseau (17, 170) et l'organe transmetteur de force (11) et située à l'extérieur du tube cylindrique (1), cette articulation présentant au moins un axe d'articulation (19) qui, de préférence, est perpendiculaire à l'axe (13) du cylindre et est contenu dans le plan médian (14) de la fente longitudinale, l'organe transmetteur de force (11) et le coulisseau (17, 170) pouvant tourner l'un par rapport à l'autre, dans une plage limitée, autour de cet axe.

2. Dispositif selon revendication 1, caractérisé par le fait que l'organe transmetteur de force (11) est guidé sur les parois latérales de la fente longitudinale (10).

3. Dispositif selon revendication 2, selon l'une quelconque des revendications précédentes, caractérisé par le fait que l'organe transmetteur de force (11) prend appui latéralement, avec contact de glissement ou de roulement, contre les parois latérales de la fente longitudinale (10), par des pièces de guidage.

4. Dispositif selon l'une quelconque des revendications précédentes, caractérisé par le fait que l'articulation (18) présente un tourillon circulaire (22, 220) lié à l'organe transmetteur de force (11) ou au coulisseau (17, 170) et engagé avec possibilité de rotation dans une cuvette correspondante (24) que comporte le coulisseau ou l'organe transmetteur de force.

5. Dispositif selon l'une quelconque des revendications précédentes, caractérisé par le fait qu'à l'endroit de l'articulation (18) l'organe transmetteur de force (11) et le coulisseau (17, 170) sont reliés entre eux également avec une possibilité de translation mutuelle limitée suivant l'axe d'articulation (19).

6. Dispositif selon les revendications 4 et 5, caractérisé par le fait que le tourillon cylindrique (22, 220) est monté dans la cuvette (24) avec possibilité de translation limitée suivant la direction de l'axe d'articulation (19).

7. Dispositif selon l'une quelconque des revendications précédentes, caractérisé par le fait que la bande de recouvrement (30) traverse le coulisseau (17) en passant par-dessus l'articulation (18).

8. Dispositif selon revendication 7, caractérisé par le fait qu'un organe de couverture (40) destiné à recouvrir la bande de recouvrement (30) est rapporté sur le coulisseau (170).

9. Dispositif selon l'une quelconque des revendications précédentes, caractérisé par le fait que le coulisseau (170) est rigidement lié à un chariot (46) guidé longitudinalement sur l'extérieur du tube cylindrique (2) et agencé sur le côté dessous de celui-ci, à l'opposé de la fente longitudinale (10).

10. Dispositif selon l'une quelconque des revendications précédentes, caractérisé par le fait qu'une échelle graduée (42) est agencée extérieurement sur le tube cylindrique (1), dans la région de la fente longitudinale (10), et coopère avec le coulisseau (170) ou avec un organe (40) lié à celui-ci.

11. Dispositif selon l'une quelconque des revendications 1 à 10, caractérisé par le fait qu'au moins un élément de renforcement (45) dirigé longitudinalement est agencé sur le tube cylindrique (1) à côté de la fente longitudinale (10).

12. Dispositif selon l'une quelconque des revendications précédentes, caractérisé par le fait que l'élément récepteur de force est un piston (4) conjugué, de manière étanche, à la paroi intérieure du tube cylindrique.

13. Dispositif selon revendication 12, caractérisé par le fait que le piston (4) présente une pièce tubulaire (5) liée à l'organe transmetteur de force (11), dans chaque côté de laquelle est insérée une partie piston coaxiale (6) portant des moyens d'étanchéité (8).

14. Dispositif selon l'une quelconque des revendications 1 à 11, caractérisé par le fait que l'élément récepteur de force est un écrou (50) engagé sur une tige filetée (500) qui peut être couplée à une source d'entraînement et qui est montée à rotation dans des pièces d'extrémité (3) agencées aux extrémités du tube cylindrique (1).

15. Dispositif selon l'une quelconque des revendications précédentes, caractérisé par le fait qu'au tube cylindrique (1) est associé un système de guidage externe dirigé parallèlement à l'axe (13) du cylindre et doté d'une partie guidée (45a) liée, éventuellement avec une possibilité de mouvement limité, à l'organe transmetteur de force (11) ou au coulisseau (17, 170).

Fig. 1

0 157 892

Fig.2

Fig. 3